# EUROPÄISCHE PATENTSCHRIFT

(11) **EP 3 748 182 B1**
(45) Veröffentlichungstag und Bekanntmachung des Hinweises auf die Patenterteilung: **25.05.2022**
(21) Anmeldenummer: 20177939.4
(22) Anmeldetag: 03.06.2020
(51) Int. Cl.: F16C 33/80, F16C 33/78

(54) **ROLLENLAGER-ANORDUNG MIT EINER DICHTUNGSVORRICHTUNG ZUR ABDICHTUNG DES LAGERSPALTS**
ROLLER BEARING ARRANGEMENT WITH A SEALING DEVICE FOR SEALING THE BEARING GAP
AGENCEMENT DE PALIER À ROULEAUX DOTÉ D'UN DISPOSITIF D'ÉTANCHÉITÉ PERMETTANT D'ÉTANCHÉIFIER LA FENTE DE PALIER

(30) Priorität: 04.06.2019 DE 202019002432 U
(43) Veröffentlichungstag der Anmeldung: 09.12.2020
(73) Patentinhaber: IMO Holding GmbH, 91350 Gremsdorf (DE)
(72) Erfinder: FRANK, Hubertus, 91315 Höchstadt (DE); SCHNAPP, Wolfgang, 96179 Rattelsdorf (DE)
(74) Vertreter: Schmidt, Steffen J.

(56) Entgegenhaltungen:
- EP-A2- 2 927 115
- WO-A1-2007/034305
- DE-A1-102011 011 163
- JP-B2- 3 646 951
- JP-U- S61 184 124
- US-A1- 2004 026 867
- US-A1- 2009 127 795
- US-A1- 2011 216 993
- US-A1- 2011 291 363
- US-A1- 2016 115 943

## Beschreibung

Die Anmeldung betrifft eine Rollenlager-Anordnung mit einer Dichtungsvorrichtung zur Abdichtung des Lagerspalts.

### Technischer Hintergrund

Rollenlager-Anordnungen werden beispielsweise bei Windkraftanlagen eingesetzt. Mit der zunehmenden Nutzung alternativer Energien hat auch die Dimensionierung der hierfür eingesetzten Windkraftanlagen zugenommen. Damit sind auch die Beanspruchungen der Trag- und Lagereinheiten derartiger Windkraftanlagen gewachsen.

Eine Windkraftanlage umfasst typischerweise einen Turm, an dessen oberem Ende ein Maschinenhaus angeordnet ist. In dem Maschinenhaus ist ein Rotor mit Hilfe eines so genannten Hauptlagers um eine horizontale Achse drehbar gelagert. An einer Nabe des Rotors sind Rotorblätter montiert, beispielsweise drei Rotorblätter, und zwar jeweils über ein Blattlager. Das Blattlager ermöglicht dabei eine Drehung des Rotorblatts um seine Längsachse. Das Maschinenhaus ist über ein so genanntes Turmlager um eine vertikale Achse schwenkbar, so kann die Richtung der Drehachse des Rotors zum Wind ausgerichtet werden.

Mithilfe des Blattlagers kann somit der Anstellwinkel des Rotorblatts an unterschiedliche Windverhältnisse angepasst werden. Hierbei treten als größte Belastung typischerweise Kippmomente auf, die die im Zentrum des Winddrucks konzentrierte Windlast auf das Blattlager übertragen. Mit Bezug auf ein solches Kippmoment stellt das Blattlager einen Angelpunkt dar, und aufgrund des beträchtlichen Hebelarms resultiert aus der Windlast eine sehr hohe Biegebeanspruchung der Blattwurzel und des Blattlagers.

Bei einem Hauptlager einer Windkraftanlage sind die Biegemomente, die hier von den einzelnen Rotorblättern auf die Nabe übertragen werden, grundsätzlicher weniger dominierend, da sich diese Biegemomente in der Regel zumindest teilweise kompensieren. Außerdem dreht sich der Rotor und damit das Hauptlager einer Windkraftanlage üblicherweise während der Einleitung von Drehmomenten, so dass die Wälzkörper des Hauptlagers in Bewegung sind und somit praktisch keine lokalen Dauerbelastungen auftreten.

ringförmige Halteplatte, die stirnseitig am Außenring angeschraubt ist, gehalten. Die Dichtringe weisen dabei jeweils einen Grundkörper auf sowie eine Dichtlippe, die sich von dem Grundkörper ausgehend schräg radial einwärts erstreckt. Durch diese Dichtringe wird eine besondere gute Abdichtung gegen Öl erzielt.

Allerdings lässt sich mit einer solchen Mehrfachdichtung der Zeitpunkt des Auftretens von Leckagen nur in einem gewissen Maß verzögern.

Aus der DE 10 2005 041 720 A1 ist ein Lager mit einem Innenring und einem Außenring und einer Dichtung zur Abdichtung des Lagerspats bekannt. Die Dichtung umfasst einen ersten Dichtungsring, der an dem Innenring fixiert ist und einen zweiten Dichtungsring, der an dem Außenring fixiert ist. Der an dem Außenring fixierte Dichtungsring weist eine Dichtlippe auf, die gegen ein, am anderen Dichtungsring angeordnetes Metallband drückt. Dabei ist an dem Dichtungsring des Außenrings eine Metallfeder eingelegt, die die Dichtlippe gegen das Metallband drückt. Hierdurch lässt sich der Anpressdruck der Dichtlippe und damit deren Dichtungswirkung erheblich steigern. Die Dichtung arbeitet auch unter rauen Umweltbedingungen über einen langen Zeitraum verschleißarm.

Allerdings nimmt mit zunehmendem Durchmesser der Dichtung die Wirkung einer derartigen Metallfeder ab, so dass ab einer gewissen Größe auch eine derartige Metallfeder kaum noch eine Erhöhung des Anpressdrucks der Dichtlippe bewirken kann.

Es sind ferner Anordnungen bekannt, bei denen nicht eine Welle in einem Gehäuse, sondern ein Gehäuse um eine feststehende Welle dreht. Hier sind aus dem Stand der Technik außendichtende Wellendichtringe mit einer Fingerfeder zur Vorspannung der Dichtlippe bekannt. Allerdings besteht auch hier die Gefahr von Fettleckagen.

Entsprechende Wellendichtringe sind dabei im Allgemeinen verhältnismäßig teuer, weil für jeden Lagerdurchmesser eigens ein aufwändiges Vulkanisierungswerkzeug erforderlich ist und dabei die Stückzahl der herzustellenden Dichtungen in der Regel vergleichsweise klein ist. Wenn Dichtungen ersetzt werden müssen, ist zum Einbau ein aufwändiges Vulkanisierungsverfahren erforderlich, weil eine Ersatzdichtung nicht endlos eingebaut werden kann.

Die Dokumente WO 2007/034305 A1, US 2011/216993 A1, US 2009/127795 A1, US 2016/115943 A1, US 2004/026867 A1, JP 3646951 B2 und JP S61 184124 U zeigen jeweils Wälzlageranordnungen mit modularen Dichtelementen, die einen Austritt von Schmiermittel aus einem Zwischenraum zwischen zwei Lagerringen erschweren.

Ferner offenbaren die Dokumente EP 2 927 115 A2, DE 10 2011 011 163 A1 und US 2011/291363 A1 Lageranordnungen mit Dichtungsvorrichtungen, die an einer Anlauffläche eines Lagerrings anliegen.

### Aufgabe

Bei einer Rollenlager-Anordnung soll in effizienter Weise die Gefahr einer Leckage von Schmiermittel (Fett oder Öl) vermindert werden.

### Lösung

Diese Aufgabe wird mit Rollenlager-Anordnungen gemäß den unabhängigen Ansprüchen 1 und 8 gelöst. Bevorzugte Ausführungsformen sind in den abhängigen Ansprüchen angegeben.

Eine anmeldungsgemäße Rollenlager-Anordnung umfasst einen ersten Lagerring und einen zweiten Lagerring, der um eine Drehachse drehbar gegenüber dem ersten Lagerring angeordnet ist. Dabei überlappen sich der erste Lagerring und der zweite Lagerring zumindest teilweise axial, so dass einer der zwei Lagerringe einen Innenring bildet und der andere Lagerring einen Außenring. Insbesondere hat dabei der Innenring einen kleineren Außendurchmesser als der Außenring; vorzugsweise hat der Innenring außerdem einen kleineren Innendurchmesser als der Außenring. Der erste Lagerring weist eine stirnseitige Anschlussfläche für eine drehfeste Verbindung mit einem ersten Maschinenteil auf und der zweite Lagerring weist eine stirnseitige Anschlussfläche für eine drehfeste Verbindung mit einem zweiten Maschinenteil auf.

Weiterhin umfasst die Rollenlager-Anordnung wenigstens zwei Reihen von zwischen dem ersten Lagerring und dem zweiten Lagerring abrollenden Wälzkörpern. Vorzugsweise sind dabei zwei Reihen von Wälzkörpern axial beabstandet ausgebildet, wobei die Rotationsachsen der Wälzkörper dieser zwei Reihen insbesondere senkrecht zur Drehachse orientiert sind. Dabei kann weiterhin eine, axial zwischen den zwei Reihen angeordnete dritte Reihe von Wälzkörpern vorgesehen sein, wobei die Rotationsachsen der Wälzkörper der dritten Reihe parallel zur Drehachse orientiert sind.

Zwischen dem ersten Lagerring und dem zweiten Lagerring ist ein zumindest abschnittweise kreiszylindrischer Lagerspalt gebildet, der zumindest teilweise mit einem Schmiermittel, insbesondere mit einem Schmierfett gefüllt ist. Dabei umfasst die Rollenlager-Anordnung weiterhin eine Dichtungsvorrichtung zur Abdichtung des Lagerspalts.

Die Dichtungsvorrichtung weist dabei eine Labyrinth-Dichtung mit mehreren, am ersten Lagerring befindlichen ersten Kammelementen und mehreren, am zweiten Lagerring befindlichen und mit den ersten Kammelementen kämmenden zweiten Kammelementen auf. Dabei ist ein Abschnitt des Lagerspalts von den ersten Kammelementen einerseits und den zweiten Kammelementen andererseits begrenzt.

Auf diese Weise ist der Abschnitt des Lagerspalts Labyrinthartig verlaufend gestaltet, wodurch der Strömungswiderstand für das Schmiermittel signifikant erhöht ist, so dass auf diese Weise eine geeignete Abdichtung gewährleistet ist. Dabei eignet sich die Abdichtung besonders, wenn das Schmiermittel ein Schmierfett ist.

Dadurch, dass eine Labyrinth-Dichtung berührungslos arbeitet, sich also hier die miteinander kämmenden Kammelemente nicht berühren, lässt sich erzielen, dass die ersten und die zweiten Kammelemente auch im Fall von größeren Lagerverformungen nicht gegenseitig anlaufen. So eignet sich die Rollenlager-Anordnung besonders im Fall von entsprechend großen Beanspruchungen bzw. Lagerverformungen.

Vorzugsweise ist dabei die Labyrinth-Dichtung derart gestaltet, dass der Abschnitt des Lagerspalts einen ersten, den wenigstens zwei Reihen von Wälzkörpern zugewandten Endbereich aufweist und/oder einen, dem ersten Endbereich gegenüberliegenden zweiten Endbereich, der einer Mündung des Lagerspalts in einen Außenbereich der Rollenlager-Anordnung zugewandt ist, wobei der erste Endbereich radial weiter von der Drehachse beabstandet ist als der zweite Endbereich. Auf diese Weise eignet sich die Rollenlager-Anordnung insbesondere für den Fall, dass im Betriebsfall die Drehachse horizontal verläuft, wie beispielsweise bei einem Hauptlager einer Windkraftanlage, denn hier muss das Schmiermittel, ausgehend vom tiefsten Punkt des Lagerspalts, also von der Stelle des größten statischen Drucks, entgegen der Schwerkraft nach oben wandern, um von den Wälzkörpern zu der Mündung des Lagerspalts zu gelangen. Die Gefahr einer Fettleckage ist somit weiterhin reduziert.

Vorzugsweise ist dabei die Gestaltung derart, dass die Mündung des Lagerspalts an einer Stirnseite der Rollenlager-Anordnung gebildet ist.

Beispielsweise kann hierbei vorgesehen sein, dass die Labyrinth-Dichtung sich in einer Ebene erstreckt, die senkrecht zur Drehachse orientiert ist. So muss das Schmiermittel im Fall einer horizontalen Orientierung der Drehachse ausgehend vom tiefsten Punkt in erster Näherung senkrecht nach oben wandern, um zur Mündung zu gelangen.

Gemäß einer Variante weist die Dichtungsvorrichtung weiterhin wenigstens ein, der Labyrinth-Dichtung benachbartes elastisches Dichtelement für eine berührende Abdichtung des Lagerspalts auf, insbesondere in Form eines Gummi-, Schaum- oder Filzelements. Hierdurch lässt sich auf einfache Weise die Dichtwirkung verstärken. Herstellungstechnisch vorteilhaft kann dabei das wenigstens eine elastische Dichtelement einfach geformt sein, beispielsweise einen rechteckigen oder kreisförmigen Querschnitt aufweisen.

Vorzugsweise ist dabei das wenigstens eine elastische Dichtelement in wenigstens eine, am ersten Lagerring oder am zweiten Lagerring befindliche Nut eingreifend angeordnet. Dabei kann die Nut einen sehr einfach geformten Querschnitt, beispielsweise eine U-Form aufweisen. Hierdurch ist die Herstellung weiterhin vereinfacht.

Eine besonders geeignete Dichtwirkung lässt sich dabei erzielen, wenn die Dichtungsvorrichtung wenigstens zwei elastische Dichtelemente aufweist, zwischen denen sich die Labyrinth-Dichtung befindet. So lässt sich eine Mehrfach-Dichtwirkung erzielen, durch die sich die Wirkung der Dichtungsvorrichtung nochmals weitergehend steigern lässt.

Gemäß einer Variante weist der erste Lagerring ein reversibel lösbar gestaltetes Halteteil auf, an dem die ersten Kammelemente angeordnet sind und/oder der zweite Lagerring ein reversibel lösbar gestaltetes Halteteil, an dem die zweiten Kammelemente angeordnet sind. So lässt sich erzielen, dass ein Teil der Dichtungsvorrichtung beispielsweise für eine Kontrolle, Wartung oder Reinigung abgenommen werden kann. Auch lassen sich so Teile der Dichtungsvorrichtung austauschen.

Vorzugsweise ist zumindest einer der zwei Lagerringe aus mindestens zwei, axial miteinander zumindest teilweise fluchtenden Teilen zusammengesetzt. Die Teile sind dabei vorzugsweise jeweils ringförmig. Hierdurch ist ein Zusammensetzen der Rollenlager-Anordnung besonders geeignet möglich.

Vorzugsweise umfassen die ersten Kammelemente und/oder die zweiten Kammelemente kreisförmig um die Drehachse gebildete Bünde bzw. Erhebungen oder Stufen. So lassen sich die Kammelemente besonders einfach herstellen. Vorzugsweise weisen dabei die Bünde bzw. Stufen der ersten Kammelemente bzw. der zweiten Kammelemente jeweils eine identische Form und/oder eine identische Größe auf.

Beispielsweise kann dabei ein Bund bzw. eine Erhebung derart geformt sein (oder werden), dass er bzw. sie in einem Schnitt durch die Drehachse betrachtet eine U-Form aufweist, wobei die beiden U-Schenkel durch zwei, sich symmetrisch um die Drehachse erstreckende kreiszylinderförmige Mantelflächen gebildet sind, und der, die beiden U-Schenkel miteinander verbindende Verbindungschenkel durch eine normal zur Drehachse orientierte Stirnfläche. Hierdurch ist eine besonders einfache Herstellung ermöglicht.

Gemäß einer Variante weist der Außenring der Rollenlager-Anordnung einen Durchmesser von mehr als 1000 mm auf. In diesem Fall kommen die Vorteile der Dichtungsanordnung besonders vorteilhaft zum Tragen. Beispielsweise kann die Rollenlager-Anordnung als eine Rollenlager-Anordnung für eine Windkraftanlage gestaltet sein.

Gemäß einem weiteren Aspekt umfasst eine anmeldungsgemäße Rollenlager-Anordnung einen ersten Lagerring und einen zweiten Lagerring, der um eine Drehachse drehbar gegenüber dem ersten Lagerring angeordnet ist. Dabei überlappen sich der erste Lagerring und der zweite Lagerring zumindest teilweise axial, so dass einer der zwei Lagerringe einen Innenring bildet und der andere Lagerring einen Außenring. Insbesondere hat dabei der Innenring einen kleineren Außendurchmesser als der Außenring; vorzugsweise hat der Innenring außerdem einen kleineren Innendurchmesser als der Außenring. Der erste Lagerring weist eine stirnseitige Anschlussfläche für eine drehfeste Verbindung mit einem ersten Maschinenteil auf und der zweite Lagerring weist eine stirnseitige Anschlussfläche für eine drehfeste Verbindung mit einem zweiten Maschinenteil auf.

Weiterhin umfasst die Rollenlager-Anordnung wenigstens zwei Reihen von zwischen dem ersten Lagerring und dem zweiten Lagerring abrollenden Wälzkörpern. Vorzugsweise sind dabei zwei Reihen von Wälzkörpern axial beabstandet ausgebildet, wobei die Rotationsachsen der Wälzkörper dieser zwei Reihen insbesondere senkrecht zur Drehachse orientiert sind. Dabei kann weiterhin eine, axial zwischen den zwei Reihen angeordnete dritte Reihe von Wälzkörpern vorgesehen sein, wobei die Rotationsachsen der Wälzkörper der dritten Reihe parallel zur Drehachse orientiert sind.

Zwischen dem ersten Lagerring und dem zweiten Lagerring ist ein abschnittweise kreiszylindrischer Lagerspalt gebildet, der zumindest teilweise mit einem Schmiermittel, insbesondere mit einem Schmierfett gefüllt ist. Dabei umfasst die Rollenlager-Anordnung weiterhin eine Dichtungsvorrichtung zur Abdichtung des Lagerspalts.

Die Dichtungsvorrichtung weist dabei eine Gleitringdichtung mit wenigstens einem, kreisringscheibenförmigen und sich um die Drehachse erstreckenden Dichtring auf, der an einem der zwei Lagerringe fest oder beweglich anliegt und der dichtend gegen eine Dichtungsanlauffläche des anderen Lagerrings fest oder beweglich anliegt. Dabei ist an dem ersten Lagerring eine senkrecht zur Drehachse orientierte Schulterfläche gebildet, wobei der Dichtring zumindest teilweise an der Schulterfläche anliegt.

Auch diese Gestaltung eignet sich bei einfacher Herstellungsmöglichkeit insbesondere bei Großlagern zur Abdichtung im Fall von Schmierfett.

Vorzugsweise kann der Dichtring Gummi oder Schaumstoff oder Filz enthalten oder aus einem der genannten Materialien bestehen.

Vorzugsweise ist dabei die Gestaltung derart, dass der Dichtring mit einer Mantelfläche dichtend gegen die Dichtungsanlauffläche drückt.

Gemäß einer besonders bevorzugten Ausführung weist der erste Lagerring einen, sich am inneren Rand der Schulterfläche anschließenden und sich zylindrisch um die Drehachse erstreckenden Mantelflächenbereich auf, wobei die Gleitringdichtung weiterhin wenigstens einen weiteren kreisringscheibenförmigen und sich um die Drehachse erstreckenden Dichtring aufweist, der zumindest teilweise axial mit dem zuerst genannten Dichtring fluchtet und der dichtend entweder gegen den Mantelflächenbereich oder gegen die Dichtungsanlauffläche anliegt.

Weiterhin vorzugsweise umfasst dabei die Dichtungsvorrichtung mehrere weitere Dichtringe, wobei der zuerst genannte Dichtring und die mehreren weiteren Dichtringe axial hintereinander in abwechselnder Reihenfolge gegen die Dichtungsanlauffläche und gegen den Mantelflächenbereich anliegend angeordnet sind.

### Ausführunqsbeispiele

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Es zeigen
- Fig. 1: eine Schnittdarstellung zu einem ersten Ausführungsbeispiel einer anmeldungsgemäßen Rollenlager-Anordnung mit einer Dichtungsanordnung zur Abdichtung des Lagerspalts;
- Fig. 2: eine Schnittdarstellung, die die in Fig. 1 gezeigte Dichtungsvorrichtung näher zeigt;
- Fig. 3a: eine der Fig. 2 entsprechende Darstellung zu einer Variante der Dichtungsvorrichtung;
- Fig. 3b: eine Handskizze zu einer weiteren Variante; und
- Fig. 5: eine Darstellung zu einer weiteren Variante der Dichtungsvorrichtung.

Die beigefügten Zeichnungen, der technische Inhalt und die detaillierte Beschreibung beziehen sich auf bevorzugte Ausführungsformen, was jedoch nicht als Beschränkung des Anmeldungsgegenstands aufzufassen ist. Alle gleichwertigen Variationen und Änderungen, die entsprechend den beigefügten Ansprüchen der vorliegenden Anmeldung vorgenommen werden, sind durch diese Ansprüche abgedeckt.

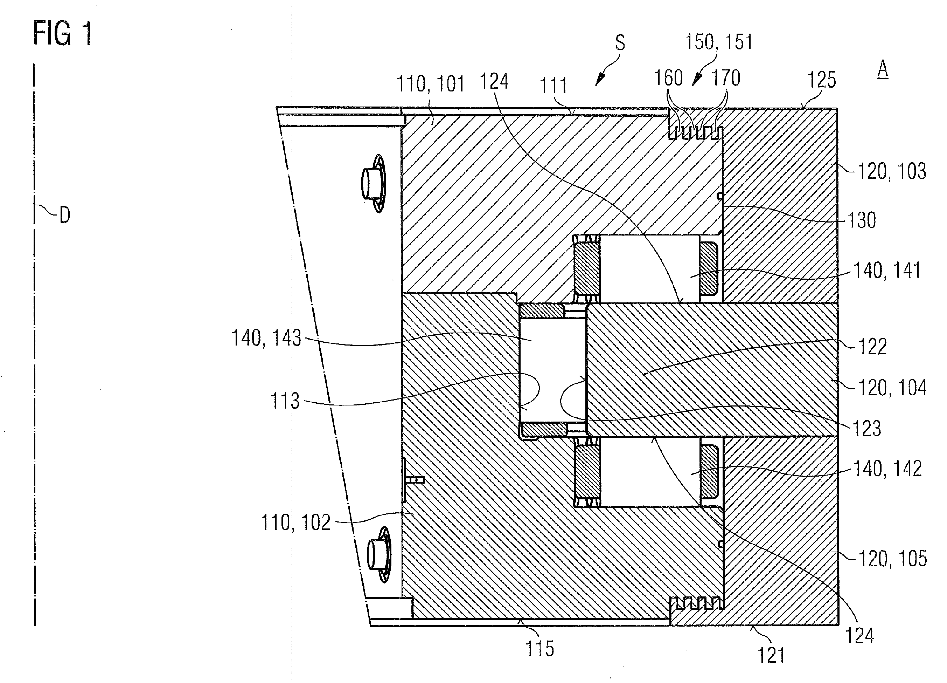

Fig. 1 zeigt eine teilweise Schnittdarstellung eines ersten Ausführungsbeispiels einer anmeldungsgemäßen Rollenlager-Anordnung. Die Rollenlager-Anordnung weist einen ersten Lagerring 110 auf, sowie einen zweiten Lagerring 120, der um eine Drehachse D drehbar gegenüber dem ersten Lagerring 110 angeordnet ist. Die beiden Lagerringe 110, 120 überlappen sich teilweise axial, wobei einer der Lagerringe 110, 120, hier beispielhaft der erste Lagerring 110 einen kleineren Außendurchmesser und einen kleineren Innendurchmesser aufweist als der andere, hier der zweite Lagerring 120. So sind - hier durch den ersten Lagerring 110 - ein Innenring und - hier durch den zweien Lagerring 120 - ein Außenring der Rollenlager-Anordnung gebildet.

Der erste Lagerring 110 weist eine stirnseitige, beispielsweise normal zur Drehachse D orientierte Anschlussfläche 111 für eine drehfeste Verbindung mit einem (in den Figuren nicht gezeigten) ersten Maschinenteil auf und der zweite Lagerring 120 weist eine, beispielsweise normal zur Drehachse D orientierte stirnseitige Anschlussfläche 121 für eine drehfeste Verbindung mit einem (in den Figuren nicht gezeigten) zweiten Maschinenteil auf. Dabei liegen sich die Anschlussfläche 111 des ersten Lagerrings 110 und die Anschlussfläche 121 des zweien Lagerrings 120 vorzugsweise axial gegenüber.

Weiterhin umfasst die Rollenlager-Anordnung wenigstes zwei, im gezeigten Beispiel drei Reihen von zwischen dem ersten Lagerring 110 und dem zweiten Lagerring 120 abrollenden Wälzkörpern 140 auf. Im gezeigten Beispiel sind drei Reihen von Wälzkörpern 140 angeordnet, wobei eine erste Reihe 141 von Wälzkörpern und eine zweite Reihe 142 von Wälzkörpern axial beabstandet und dabei axial zumindest teilweise fluchtend angeordnet sind. Vorzugsweise sind die Wälzkörper der ersten Reihe 141 und der zweiten Reihe 142 derart angeordnet, dass ihre Rotationsachsen senkrecht zur Drehachse D orientiert sind. Hierdurch eignet sich die Rollenlager-Anordnung besonders zur Aufnahme von Kippmomenten und somit beispielsweise als Blattlager einer Windkraftanlage. Die dritte Reihe 143 von Wälzkörpern ist axial zwischen der ersten Reihe 141 und der zweiten Reihe 142 angeordnet. Die Rotationsachsen der Wälzkörper der dritten Reihe 143 sind vorzugsweise parallel zur Drehachse orientiert. Die Wälzkörper der dritten Reihe 142 können dabei vorteilhaft kleiner gestaltet sein als die Wälzkörper der ersten Reihe 141 und der zweiten Reihe 142, insbesondere, wenn die radial auf die Rollenlager-Anordnung einwirkenden Kräfte kleiner sind als die axial einwirkenden Kräfte.

Der Außenring 120 weist hier auf seiner radial nach innen weisenden Seite einen Ringbund 122 auf, der eine Mantelfläche 123 und zwei jeweils kreisringförmige Stirnflächen 124 aufweist. Dabei ist an der Mantelfläche 123 eine Laufbahn für die dritte Reihe 143 von Wälzkörpern gebildet und auf den Stirnflächen 124 ist jeweils eine Laufbahn für die erste Reihe 141 bzw. die zweite Reihe 142 von Wälzkörpern gebildet.

Der Innenring 110 weist auf seiner radial nach außen weisenden Seite eine Ausnehmung 113 auf, in die die drei Reihen 141, 142, 143 von Wälzkörpern und der Ringbund 122 des Außenrings 120 eingreifend angeordnet sind. Somit überlappen sich im gezeigten Beispiel der Innenring 110 und der Außenring 120 auch radial.

Für eine geeignete Zusammensetzbarkeit der Rollenlager-Anordnung kann der Innenring 110 aus beispielsweise zwei, axial miteinander zumindest teilweise fluchtenden Innenring-Teilen 101, 102 zusammengesetzt sein, einem ersten Innenring-Teil 101 und einem zweiten Innenring-Teil 102. Dabei kann die Anschlussfläche 111 des Innenrings 110 an einem der beiden Innenring-Teile 101, 102 gebildet sein, also beispielsweise, wie gezeigt, am ersten Innenring-Teil 101. Am anderen Innenring-Teil kann eine stirnseitige Fläche 115 gebildet sein, die der Anschlussfläche 111 axial gegenüberliegt.

Der Außenring 120 kann aus beispielsweise drei, axial miteinander zumindest teilweise fluchtenden Außenring-Teilen 103, 104, 105 zusammengesetzt sein, einem ersten Außenring-Teil 103, einem, den Ringbund 122 aufweisenden zweiten Außenring-Teil 104, und einem dritten Außenring-Teil 105. Dabei kann die Anschlussfläche 121 des Außenrings 120 beispielsweise an dem dritten Außenring-Teil 105 gebildet sein. Am ersten Außenring-Teil 103 kann eine stirnseitige Fläche 125 des Außenrings 120 gebildet sein, die der Anschlussfläche 121 axial gegenüberliegt.

Alternativ kann die beschriebene Gestaltung mit Bezug auf den Innenring und den Außenring andersherum gestaltet sein, so dass der Innenring einen entsprechenden Ringbund aufweist, der in eine entsprechend gebildete Ausnehmung des Außenrings eingreift.

Zwischen dem ersten Lagerring 110 und dem zweiten Lagerring 120 ist ein Lagerspalt 130 gebildet, der zumindest abschnittweise kreiszylindrisch geformt ist. Dabei ist der Lagerspalt 130 zur Verminderung von Verschleiß zumindest teilweise mit einem Schmiermittel, insbesondere Schmierfett gefüllt.

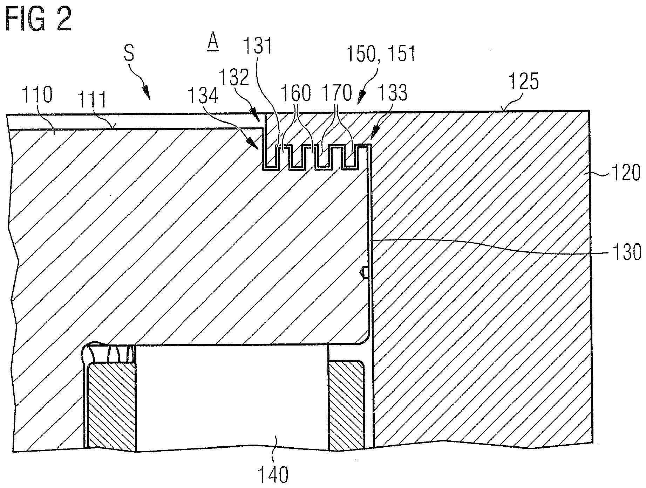

Weiterhin umfasst die Rollenlager-Anordnung eine Dichtungsvorrichtung 150 zur Abdichtung des Lagerspalts 130. In Fig. 2 ist ein Bereich um die Dichtungsvorrichtung 150 vergrößert gezeigt. Bei dem gezeigten Ausführungsbeispiel umfasst die Dichtungsvorrichtung 150 eine Labyrinth-Dichtung 151 mit mehreren, am ersten Lagerring 110 befindlichen ersten Kammelementen 160 und mehreren, am zweiten Lagerring 120 befindlichen und mit den ersten Kammelementen 160 kämmenden zweiten Kammelementen 170, wobei ein Abschnitt 131 des Lagerspalts 130 von den ersten Kammelementen 160 einerseits und den zweiten Kammelementen 170 andererseits begrenzt ist.

Der Lagerspalt 130 mündet über eine kreisförmige Mündung 132 an einer Stirnseite S der Rollenlager-Anordnung, hier beispielhaft zwischen der stirnseitigen Fläche 125 des Außenrings 120 und der Anschlussfläche 111 des Innenrings 110, in einen Außenbereich A der Rollenlager-Anordnung. Auf der axial gegenüberliegenden Stirnseite kann die Anordnung analog gestaltet sein.

Vorzugsweise ist die Labyrinth-Dichtung 151 derart gestaltet, dass der Abschnitt 131 des Lagerspalts 130 einen ersten, den wenigstens zwei Reihen von Wälzkörpern 140 zugewandten Endbereich 133 aufweist und/oder einen, dem ersten Endbereich 133 gegenüberliegenden zweiten Endbereich 134, der der Mündung 132 des Lagerspalts 130 in den Außenbereich A der Rollenlager-Anordnung zugewandt ist, wobei der erste Endbereich 133 radial weiter von der Drehachse D beabstandet ist als der zweite Endbereich 134. Wenn im Betriebsfall die Drehachse D horizontal orientiert ist, muss somit an der tiefsten Stelle, also an derjenigen Stelle, an der der statische Druck auf das Schmierfett am größten ist, das Schmierfett entgegen der Schwerkraft wandern, um von den Wälzkörpern 140 zu der Mündung 132 zu gelangen. Die Kammelemente 160, 170 können dabei besonders vorteilhaft in einer normal zu der Drehachse D orientierten Ebene E ausgebildet sein. Hierdurch ist die Wahrscheinlichkeit einer Leckage weitergehend vermindert.

Im gezeigten Beispiel umfassen die ersten Kammelemente 160 und die zweiten Kammelemente 170 kreisförmig um die Drehachse D gebildete Bünde bzw. Erhebungen. Beispielsweise können jeweils zwischen zwei und zehn Bünde vorgesehen sein, im gezeigten Beispiel sind jeweils vier Bünde vorgesehen. Insbesondere können die ersten bzw. zweiten Kammelemente 160, 170 aus den Bünden bestehen.

Die Bünde können vorzugsweise derart geformt sein, dass sie in einem Schnitt durch die Drehachse D betrachtet - also entsprechend der Darstellung von Fig. 2 - jeweils eine U-Form aufweisen, wobei die beiden U-Schenkel der U-Form durch zwei symmetrisch um die Drehachse D gebildete Mantelflächen gebildet sind und der, die beiden U-Schenkel miteinander verbindende Verbindungsschenkel durch eine, normal zur Drehachse D orientierte Stirnfläche gebildet ist.

Dabei ist die Gestaltung derart, dass sich die ersten Kammelemente 160 und die zweiten Kammelemente 170 nicht berühren.

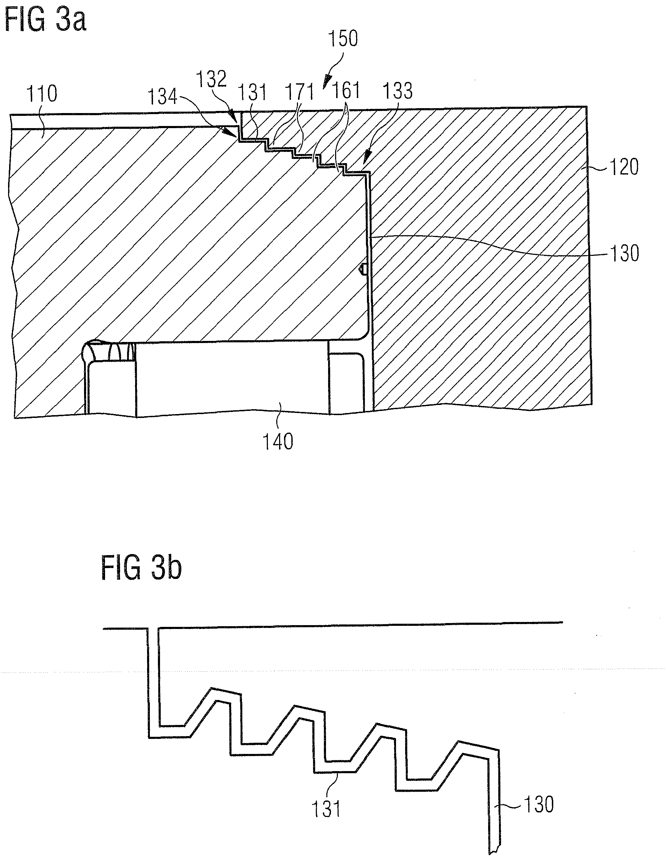

In Fig. 3a ist eine Variante der Dichtungsvorrichtung 150 skizziert. Hier sind die ersten und zweiten Kammelemente 160, 170 durch Stufen 161, 171 gebildet, die sich kreisförmig um die Drehachse D erstrecken.

Dabei ist auch hier der erste, den Wälzkörpern 140 zugewandte Endbereich 133 des Abschnitts 131 des Lagerspalts 130 weiter von der Drehachse D entfernt als der zweite, der Mündung 132 zugewandte Endbereich 134.

In Fig. 3b ist eine weitere Variante skizziert, die eine alternative Formgebung der ersten und zweiten Kammelemente zeigt. Wie in der Skizze angedeutet, sind die ersten Kammelemente und die zweiten Kammelemente insbesondere in ihrer Formgebung korrespondierend zueinander gestaltet.

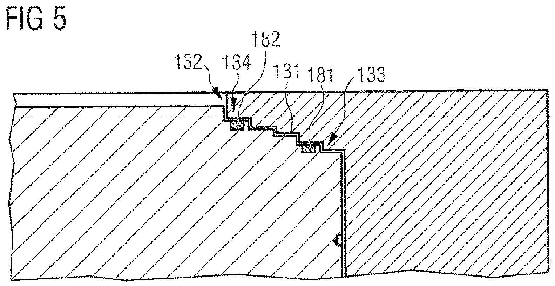

In Fig. 5 ist eine Variante der in Fig. 3a gezeigten Ausführung gezeigt, bei der zwei entsprechende elastische Elemente 181, 182 an den beiden Endbereichen 133, 134 des Abschnitts 131 des Lagerspalts 130 angeordnet sind.

Bei dem, in Fig. 7 in der unteren Hälfte gezeigten vierten Ausführungsbeispiel drückt ein Dichtring 190' ebenfalls gegen eine am Außenring 120 gestaltete Dichtungsanlauffläche. Hier weist der Dichtring 190' eine größere radiale Erstreckung auf als im dritten Ausführungsbeispiel.

In den beiden in Fig. 7 gezeigten Ausführungen ist am Innenring 110 wiederum eine entsprechende Schulterfläche und ein sich daran anschließender Mantelflächenbereich gebildet, wobei sich der Mantelflächenbereich bis zur entsprechenden Stirnfläche hin erstrecken kann. Der Dichtring 190 bzw. 190' liegt dabei zumindest teilweise an der Schulterfläche 199 an. Diese Gestaltung ist herstellungstechnisch vorteilhaft.

Zur stirnseitigen Fixierung des Gleitrings 190, 190' kann ein in erster Näherung kreisscheibenförmiges Halteelement 153, 153' vorgesehen sein, das beispielsweise über eine Schraubverbindung lösbar am Innenring 110 angeordnet ist.

In Fig. 8 ist ein fünftes Ausführungsbeispiel einer anmeldungsgemäßen Rollenlager-Anordnung skizziert. Auch hier weist der Innenring 110 zur Aufnahme der Dichtungsvorrichtung 150 eine Schulterfläche 199 und einen sich am inneren Rand der Schulterfläche 199 anschließenden und zylindrisch um die Drehachse D erstreckenden Mantelflächenbereich 200 auf. Die Dichtungsvorrichtung weist einen Dichtring 190 auf, der zumindest teilweise an der Schulterfläche 199 anliegt. Vorzugsweise drückt der Dichtring 190 gleitend gegen eine am Außenring 120 gestaltete, zylinderförmige Dichtungsanlauffläche 201.

Weiterhin weist die Dichtungsvorrichtung 150 wenigstens einen weiteren kreisringscheibenförmigen und sich um die Drehachse D erstreckenden Dichtring 195, 195' auf, der zumindest teilweise axial mit dem zuerst genannten Dichtring 190 fluchtet und der dichtend entweder gegen den Mantelbereich 200 oder gegen die Dichtungsanlauffläche 201 anliegt. Der wenigstens eine weitere Dichtring 195, 195' kann aus demselben Material bestehen wie der zuerst genannte Dichtring 190.

Im gezeigten Beispiel sind mehrere weitere Dichtringe 195, 195' vorgesehen, beispielsweise, wie exemplarisch skizziert, drei weitere Dichtringe 195, 195'. Dabei liegt vorzugsweise ein erster Teil der weiteren Dichtringe - in Fig. 8 mit dem Bezugszeichen 195 versehen - gegen den Mantelflächenbereich 200 an und ein zweiter Teil der weiteren Dichtringe - in Fig. 8 mit dem Bezugszeichen 195' versehen - gegen die Dichtungsanlauffläche 201 an. Dabei ist die Gestaltung weiterhin vorzugsweise derart, dass die weiteren Dichtringe 195, 195' eine axiale Reihe bilden und dabei in abwechselnder Reihenfolge gegen den Mantelflächenbereich 200 und gegen die Dichtungsanlauffläche 201 anliegen.

Die vorangehend beschriebenen Varianten der Wälzlageranordnung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Die Erfindung ist durch die angehängten Ansprüche definiert.

## Patentansprüche

1. Rollenlager-Anordnung, aufweisend
- einen ersten Lagerring (110);
- einen zweiten Lagerring (120), der um eine Drehachse (D) drehbar gegenüber dem ersten Lagerring (110) angeordnet ist;
wobei der erste Lagerring (110) und der zweite Lagerring (120) sich zumindest teilweise axial überlappen, so dass einer der zwei Lagerringe (110, 120) einen Innenring bildet und der andere Lagerring (110, 120) einen Außenring;
wobei der erste Lagerring (110) eine stirnseitige Anschlussfläche für eine drehfeste Verbindung mit einem ersten Maschinenteil aufweist und der zweite Lagerring (120) eine stirnseitige Anschlussfläche für eine drehfeste Verbindung mit einem zweiten Maschinenteil aufweist;
- wenigstens zwei Reihen von zwischen dem ersten Lagerring (110) und dem zweiten Lagerring (120) abrollenden Wälzkörpern (140);
wobei zwischen dem ersten Lagerring (110) und dem zweiten Lagerring (120) ein zumindest abschnittweise kreiszylindrischer Lagerspalt (130) gebildet ist, der zumindest teilweise mit einem Schmiermittel gefüllt ist;
- eine Dichtungsvorrichtung (150) zur Abdichtung des Lagerspalts (130),
**dadurch gekennzeichnet,**
**dass** die Dichtungsvorrichtung (150) eine Labyrinth-Dichtung (151) mit mehreren, durch den ersten Lagerring (110) ausgebildeten ersten Kammelementen (160) und mehreren, durch den zweiten Lagerring (120) ausgebildeten und mit den ersten Kammelementen (160) kämmenden zweiten Kammelementen (170) aufweist, wobei ein Abschnitt (131) des Lagerspalts (130) von den ersten Kammelementen (160) des ersten Lagerrings (110) einerseits und den zweiten Kammelementen (170) des zweiten Lagerrings (120) andererseits begrenzt ist.

2. Rollenlager-Anordnung nach Anspruch 1, bei der die Labyrinth-Dichtung derart gestaltet ist, dass der Abschnitt (131) des Lagerspalts (130) einen ersten, den wenigstens zwei Reihen von Wälzkörpern (140) zugewandten Endbereich (133) aufweist, und/oder einen, dem ersten Endbereich (133) gegenüberliegenden zweiten Endbereich (134), der einer Mündung (132) des Lagerspalts (130) in einen Außenbereich (A) der Rollenlager-Anordnung zugewandt ist, wobei der erste Endbereich (133) radial weiter von der Drehachse (D) beabstandet ist als der zweite Endbereich (134).

3. Rollenlager-Anordnung nach einem der vorhergehenden Ansprüche, bei der die Dichtungsvorrichtung (150) weiterhin wenigstens ein, der Labyrinth-Dichtung (151) benachbartes elastisches Dichtelement (181, 182) für eine berührende Abdichtung des Lagerspalts (130) aufweist.

4. Rollenlager-Anordnung nach Anspruch 3, bei der das wenigstens eine elastische Dichtelement (181, 182) in wenigstens eine, am ersten Lagerring (110) oder am zweiten Lagerring (120) befindliche Nut eingreifend angeordnet ist.

5. Rollenlager-Anordnung nach Anspruch 3 oder 4, bei der die Dichtungsvorrichtung (150) wenigstens zwei elastische Dichtelemente (181, 182) aufweist, zwischen denen sich die Labyrinth-Dichtung (151) befindet.

6. Rollenlager-Anordnung nach einem der vorhergehenden Ansprüche, bei der zumindest einer der zwei Lagerringe (110, 120) aus mindestens zwei, axial miteinander zumindest teilweise fluchtenden Teilen (101, 102, 103, 104, 105) zusammengesetzt ist.

7. Rollenlager-Anordnung nach einem der vorhergehenden Ansprüche, bei der die ersten Kammelemente (160) und/oder die zweiten Kammelemente (170) kreisförmig um die Drehachse (D) gebildete Bünde und/oder Stufen (161, 171) umfassen.

## Claims

1. Roller bearing arrangement, comprising
- a first bearing ring (110);
- a second bearing ring (120) rotatably arranged about an axis of rotation (D) with respect to the first bearing ring (110);
wherein the first bearing ring (110) and the second bearing ring (120) at least partially overlap axially so that one of the two bearing rings (110, 120) forms an inner ring and the other bearing ring (110, 120) forms an outer ring;
wherein the first bearing ring (110) has an end-face connection surface for a rotationally fixed connection to a first machine part and the second bearing ring (120) has an end-face connection surface for a rotationally fixed connection to a second machine part;
- at least two rows of rolling elements (140) rolling between the first bearing ring (110) and the second bearing ring (120);
wherein an at least partially circular-cylindrical bearing gap (130) is formed between the first bearing ring (110) and the second bearing ring (120), which is at least partially filled with a lubricant;
- a sealing device (150) for sealing the bearing gap (130),
**characterised**
**in that** the sealing device (150) has a labyrinth seal (151) with a plurality of first comb elements (160) formed by the first bearing ring (110) and a plurality of second comb elements (170) formed by the second bearing ring (120) and meshing with the first comb elements (160), a section (131) of the bearing gap (130) being delimited by the first comb elements (160) of the first bearing ring (110) on the one hand and the second comb elements (170) of the second bearing ring (120) on the other hand.

2. The roller bearing arrangement according to claim 1, wherein the labyrinth seal is configured such that the portion (131) of the bearing gap (130) has a first end region (133) facing the at least two rows of rolling elements (140), and/or a second end region (134) opposite the first end region (133) and facing a mouth (132) of the bearing gap (130) into an outer region (A) of the roller bearing arrangement, wherein the first end region (133) is spaced radially further from the axis of rotation (D) than the second end region (134).

3. The roller bearing assembly according to any one of the preceding claims, wherein the sealing device (150) further comprises at least one resilient sealing element (181, 182) adjacent the labyrinth seal (151) for contact sealing the bearing gap (130).

4. The roller bearing arrangement according to claim 3, wherein the at least one elastic sealing element (181, 182) is arranged to engage in at least one groove located on the first bearing ring (110) or on the second bearing ring (120).

5. The roller bearing arrangement according to claim 3 or 4, wherein the sealing device (150) comprises at least two elastic sealing elements (181, 182) between which the labyrinth seal (151) is located.

6. The roller bearing arrangement according to any one of the preceding claims, in which at least one of the two bearing rings (110, 120) is comprised of at least two bearing rings (110, 120) which are axially at least partially aligned parts (101, 102, 103, 104, 105).

7. The roller bearing arrangement according to any one of the preceding claims, wherein the first comb elements (160) and/or the second comb elements (170) comprise collars and/or steps (161, 171) formed in a circle around the axis of rotation (D).

## Revendications

1. Un ensemble de roulement à rouleaux, comprenant
- une première bague de roulement (110) ;
- une deuxième bague de roulement (120) qui est disposée de manière à pouvoir tourner autour d'un axe de rotation (D) par rapport à la première bague de roulement (110) ;
dans lequel la première bague de roulement (110) et la deuxième bague de roulement (120) se chevauchent au moins partiellement axialement, de sorte que l'une des deux bagues de roulement (110, 120) forme une bague intérieure et l'autre bague de roulement (110, 120) forme une bague extérieure ;
la première bague de palier (110) présentant une surface de raccordement frontale pour une liaison solidaire en rotation avec une première partie de machine et la deuxième bague de palier (120) présentant une surface de raccordement frontale pour une liaison solidaire en rotation avec une deuxième partie de machine ;
- au moins deux rangées d'éléments roulants (140) roulant entre la première bague de roulement (110) et la deuxième bague de roulement (120) ;
une fente de palier (130) cylindrique circulaire au moins par sections étant formée entre la première bague de palier (110) et la deuxième bague de palier (120), laquelle est au moins partiellement remplie d'un lubrifiant ;
- un dispositif d'étanchéité (150) pour assurer l'étanchéité de l'espace de palier (130),
**caractérisé en**
**ce que** le dispositif d'étanchéité (150) comprend un joint à labyrinthe (151) avec une pluralité de premiers éléments de peigne (160) formés par la première bague de palier (110) et une pluralité de seconds éléments de peigne (160) reliés à la première bague de palier (110), seconds éléments de peigne (170) formés par la seconde bague de palier (120) et s'engrenant avec les premiers éléments de peigne (160), une section (131) de l'interstice de palier (130) étant délimitée par les premiers éléments de peigne (160) de la première bague de palier (110) d'une part et par les seconds éléments de peigne (170) de la seconde bague de palier (120) d'autre part.

2. Le ensemble de roulement à rouleaux selon la revendication 1, dans lequel le joint à labyrinthe est configuré de telle sorte que la section (131) de l'interstice de palier (130) présente une première zone d'extrémité (133) tournée vers les au moins deux rangées d'éléments roulants (140) et/ou une deuxième zone d'extrémité (134) tournée vers la zone d'extrémité (135) de l'interstice de palier (130), une deuxième zone d'extrémité (134) opposée à la première zone d'extrémité (133), qui est tournée vers une embouchure (132) de la fente de palier (130) dans une zone extérieure (A) de l'agencement de palier à rouleaux, la première zone d'extrémité (133) étant plus éloignée radialement de l'axe de rotation (D) que la deuxième zone d'extrémité (134).

3. Le ensemble de roulement à rouleaux selon l'une quelconque des revendications précédentes, dans lequel le dispositif d'étanchéité (150) comprend en outre au moins un élément d'étanchéité élastique (181, 182) adjacent au joint à labyrinthe (151) pour assurer l'étanchéité par contact de l'interstice de roulement (130).

4. Le ensemble de roulement à rouleaux selon la revendication 3, dans lequel le au moins un élément d'étanchéité élastique (181, 182) est disposé de manière à s'engager dans au moins une rainure se trouvant sur la première bague de roulement (110) ou sur la deuxième bague de roulement (120).

5. Le ensemble de roulement à rouleaux selon la revendication 3 ou 4, dans lequel le dispositif d'étanchéité (150) comprend au moins deux éléments d'étanchéité élastiques (181, 182) entre lesquels se trouve le joint labyrinthe (151).

6. Le ensemble de roulement à rouleaux selon l'une quelconque des revendications précédentes, dans lequel au moins l'une des deux bagues de roulement (110, 120) est constituée d'au moins deux bagues de roulement (110, 120) reliées entre elles au moins axialement partiellement alignées (101, 102, 103, 104, 105).

7. Le ensemble de roulement à rouleaux selon l'une quelconque des revendications précédentes, dans lequel les premiers éléments de peigne (160) et/ou les deuxièmes éléments de peigne (170) comprennent des rebords et/ou des gradins (161, 171) formés de manière circulaire autour de l'axe de rotation (D).
